# EUROPEAN PATENT SPECIFICATION

(11) **EP 1 096 823 B1**
(45) Date of publication and mention of the grant of the patent: **16.06.2004**
(21) Application number: 00126472.0
(22) Date of filing: 28.04.1999
(51) Int. Cl.: H04Q 7/38

(54) **Downlink transmission selection in cellular mobile communications networks**
Wahl der Abwärtsübertragung in zellularen Mobilkommunikationsnetzen
Choix de transmission de liaison descendante dans les réseaux de transmission mobiles cellulaires

(30) Priority: 14.05.1998 GB 9810425
(43) Date of publication of application: 02.05.2001
(62) Divisional of application: 99919413.7
(73) Proprietor: FUJITSU LIMITED, Kawasaki-shi, Kanagawa 211-8588 (JP)
(72) Inventor: Mohebbi, Behzad, San Diego, CA 92130 (US); Shearme, Michael John, Amersham, Buckinghamshire HP6 6QT (GB)
(74) Representative: Hitching, Peter Matthew

(56) References cited:
- EP-A- 0 797 367
- WO-A-97/08911

## Description

The present invention relates to cellular mobile communication networks, for example Code Division Multiple Access (CDMA) cellular networks.

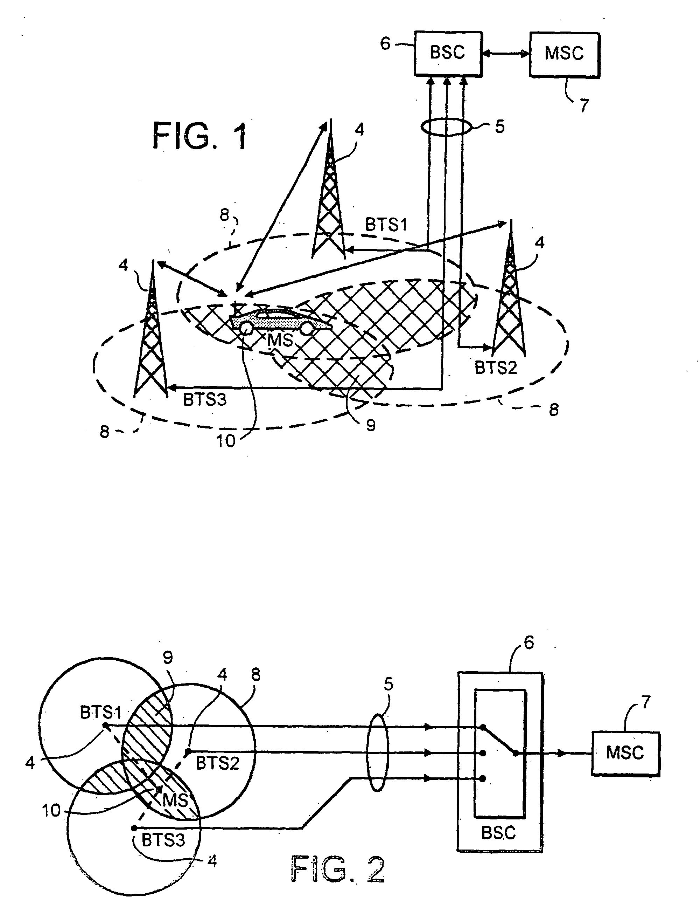

Figure 1 of the accompanying drawings shows parts of a cellular mobile telecommunication network according to the Telecommunication Industries Association (TIA)/Electronic Industries Association (EIA) Standard TIA/EIA/IS-95 of October 1994 (hereinafter "IS95"). Each of three base transceiver stations (BTSs) 4 (BTS1, BTS2 and BTS3) is connected via a fixed network 5 to a base station controller (BSC) 6, which is in turn connected to a mobile switching centre (MSC) 7. The BSC 6 serves to manage the radio resources of its connected BTSs 4, for example by performing hand-off and allocating radio channels. The MSC 7 serves to provide switching functions and coordinates location registration and call delivery.

Each BTS 4 serves a cell 8. When a mobile station (MS) 10 is in a so-called "soft hand-off" (SHO) region 9 where two or more cells overlap, a mobile station can receive transmission signals (downlink signals) of comparable strength and quality from the respective BTSs of the overlapping cells. Transmission signals (uplink signals) produced by the mobile station (MS) can also be received at comparable strengths and qualities by these different BTSs when the mobile station is in the SHO region 9.

Figure 2 of the accompanying drawings shows a situation where the MS 10 is located within the SHO region 9, and is transmitting such uplink signals that are being received by plural BTSs 4. According to the IS95 standard, a BTS 4 that receives such an uplink signal from the MS 10 relays the signal to the BSC 6 via a dedicated connection line of the fixed network 5. At the BSC 6, one of the relayed signals is selected based on a comparison of the quality of each of the received signals, and the selected signal is relayed to the MSC 7. This selection is referred to as Selection Diversity.

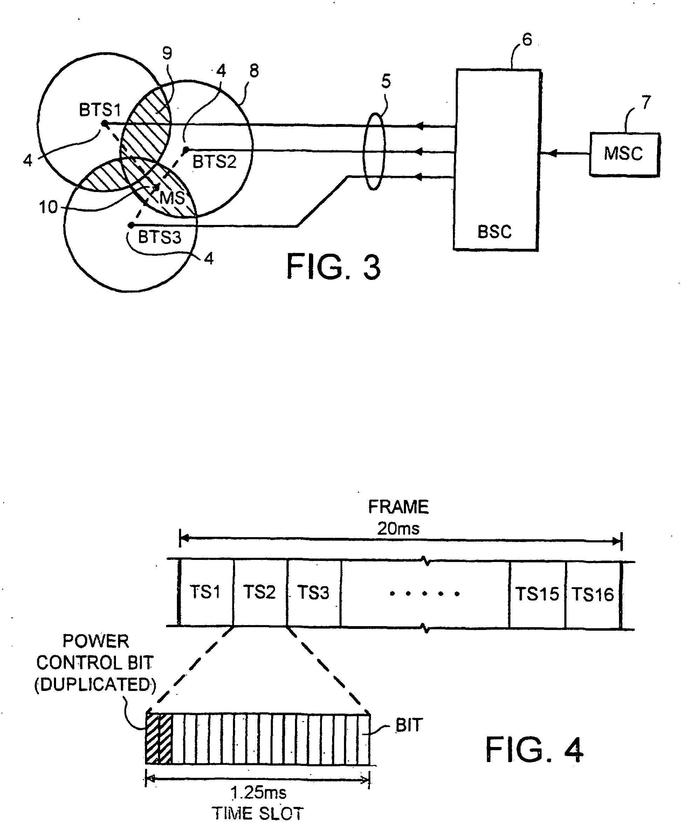

Similarly, Figure 3 of the accompanying drawings shows a situation where the MS 10 is located within the SHO region 9 and is receiving downlink signals from plural BTSs 4. According to the IS95 standard, downlink signals received by the BSC 6 from the MSC 7 are relayed to all BTSs 4 involved in the soft hand-off via respective connection lines of the fixed network 5, and subsequently transmitted by all the BTSs 4 to the MS 10. At the MS 10 the multiple signals may be combined, for example, by using maximum ratio combination (MRC), or one of them may be selected based on the signal strength or quality, i.e. using Selection Diversity as for the uplink case.

In contrast to, for example, Global System for Mobile Communication (GSM) networks, in CDMA networks each BTS 4 transmits at the same frequency. Consequently, careful control of transmission power must be maintained to minimise interference problems.

Signals are transmitted as a succession of frames according to the IS95 standard. As Figure 4 of the accompanying drawings shows, each frame is of duration 20 ms, and comprises sixteen 1.25 ms time slots. In each time slot several bits of user data and/or control information can be transmitted.

Power control of transmissions from the MS 10 to the BTSs 4 (uplink power control) in IS95 is achieved as follows. When a BTS 4 receives a signal from the MS 10 it determines whether a predetermined property of the received signal (for example absolute signal level, signal to noise ratio (SNR), signal-to-interference ratio (SIR), bit error rate (BER) or frame error rate (FER)) exceeds a preselected threshold level. Based on this determination, the BTS 4 instructs the MS 10 either to reduce or to increase its transmission power in the next time slot.

For this purpose, two bits in every time slot of a pilot channel (PCH) from the BTS 4 to the MS 10 are allocated for uplink power control (see Figure 4). Both bits have the same value, and accordingly will be referred to hereinafter as the "power control bit" (or PCB) in the singular. The power control bit is assigned a value of zero by the BTS 4 if the MS 10 is required to increase transmission power by 1 dB, and a value of one if the MS 10 is required to decrease transmission power by 1 dB. The BTS 4 is not able to request directly that the MS 10 maintain the same transmission power; only by alternately transmitting ones and zeros in the power control bit is the transmission power maintained at the same level.

When the MS 10 is in a SHO region 9, the MS 10 is required to make a decision on whether to increase or to decrease uplink transmission power based on a plurality of power control bits received respectively from the BTSs 4 involved in the soft hand-off. Consequently, an OR function is performed on all the power control bits. If the result of this OR function is zero then the MS 10 will increase power on uplink transmissions, and if the result is one then the MS 10 will decrease power on uplink transmissions. In this way, uplink transmission power is only increased if all BTSs 4 ask for an increase.

Power control of transmissions from the BTS 4 to the MS 10 (downlink power control) in IS95 is achieved as follows. When the MS 10 receives a downlink signal from a BTS 4 (or from each of a plurality of BTSs 4 in soft hand-off operation) via a traffic channel (TCH), the FER of that signal is calculated by the MS 10 which reflects the degree to which the traffic-channel signal has been corrupted by, for example, noise. This FER is then relayed by the MS 10 to the BTS 4 which transmitted the downlink signal concerned, and the BTS 4 uses this FER to decide whether to make any change to its downlink transmission power.

The soft hand-off system described above is effective in improving signal transmission between the MS 10 and the network when the MS 10 is located in regions of cell overlap near the boundaries of the individual cells. Signal quality in these regions when using a single BTS 4 may be relatively poor, but by making use of more than one BTS 4 the quality may be substantially improved.

However, the IS95 soft hand-off system has the disadvantage of increasing signal traffic in the cellular network since it is necessary to transmit downlink signals carrying the same data and/or control information to the MS 10 from every BTS 4 involved in the soft hand-off. This duplication of transmissions is undesirable because each transmission is potentially a source of interference to other transmissions in the network.

For example, the downlink power control method aims at ensuring that the MS 10 receives a useful downlink signal from every one of the BTSs 4 involved in the soft hand-off. In the event that the downlink signal from one of the BTSs is undergoing a deep fade, the MS 10 will instruct the BTS concerned to increase its downlink transmission power significantly. However, in this case the BTS concerned will inevitably cause greater interference to other transmissions taking place in its cell and in neighbouring cells. This problem may be exacerbated if, as in the IS95 standard, only one PCB is allocated in common for downlink power control to all of the BTSs involved in the soft hand-off. In this case, not only does the BTS which is experiencing a deep fade increase its downlink transmission power significantly, but also every other one of the BTSs involved in the soft hand-off increases its downlink transmission power, significantly increasing the interference within the cellular network as a whole.

Therefore it is desirable to reduce interference in the cellular network associated with the soft hand-off operation. It is also desirable to reduce interference in cellular networks in other situations in which a mobile station is in communications range of more than one base transceiver station.

WO-A-97/08911 discloses a cellular mobile communications network comprising a mobile station having: base transceiver station decision means operable, when the mobile station is capable of receiving a downlink signal from a plurality of base transceiver stations of the network, to determine that at least one of the base transceiver stations of the said plurality is not to transmit a subsequent such downlink signal to the mobile station; and base transceiver station informing means operable to inform the plurality of base transceiver stations of the determination made by the said base transceiver station decision means using one or more uplink signals transmitted by the mobile station to such base transceiver stations. In this network the subscriber terminal regularly transmits a control signal. All base stations receiving the control signal perform a power adjustment. The base stations which cannot receive the control signal terminate their downlink transmission to the subscriber terminal.

EP-A-0797367 discloses a mobile communication system in which a composition station is connected to a plurality of base stations by respective wire line transmission paths. Radio state qualities of radio channels between the plurality of base stations and a mobile station are measured. The radio channels are judged as invalid (poor radio state) or redundant (another channel has a quite good state) for composition purposes based on the measurements. The transmission in a wire line transmission path corresponding to the invalid or redundant radio channel is stopped to reduce the wire line transmission cost.

A cellular mobile communications network embodying a first aspect of the present invention is characterised in that: the decision means are operable to select a single base transceiver station to transmit said subsequent downlink signal; the informing means generate selection information which is the same for all the plurality of base transceiver stations and is an instruction to transmit for the single selected base transceiver station and an instruction not to transmit for each non-selected base transceiver station; each base transceiver station has control means which, if such selection information (BSM) is received at its base transceiver station, examine the received selection information; and each base transceiver station transmits said subsequent downlink signal unless it is disabled from transmitting by its said control means, and such disabling is brought about by the control means if the control means recognises the received selection information (BSM) as said instruction not to transmit for its base transceiver station, but is not brought about if no selection information is received.

According to a second aspect of the present invention there is provided a method of selecting a base transceiver station in a cellular mobile communications network, in which method: when a mobile. station of the network is capable of receiving a downlink signal from a plurality of base transceiver stations of the network, the mobile station determines that at least one of the base transceiver stations of the said plurality is not to transmit a subsequent such downlink signal to the mobile station; and the mobile station informs the plurality of base transceiver stations of the determination made using one or more uplink signals transmitted by the mobile station to such base transceiver stations; characterised in that: the mobile station selects a single base transceiver station to transmit said subsequent downlink signal; the mobile station generates selection information which is the same for all the plurality of base transceiver stations and is an instruction to transmit for the single selected base transceiver station and an instruction not to transmit for each non-selected base transceiver station; each base transceiver station examines such selection information if received at its base transceiver station; and each base transceiver station transmits said subsequent downlink signal unless it is disabled from transmitting, and such disabling is brought about if the base transceiver station recognises the received selection information as said instruction not to transmit for its base transceiver station, but is not brought about if no selection information is received.

According to a third aspect of the present invention there is provided a base transceiver station for use in a cellular mobile communications network comprising a mobile station which, when the mobile station is capable of receiving a downlink signal from a plurality of base transceiver stations of the network including the claimed base transceiver station, selects a single base transceiver station of the said plurality to transmit a subsequent such downlink signal to the mobile station and which informs the plurality of base transceiver stations of the selection made using selection information included in one or more uplink signals transmitted by the mobile station to such base transceiver stations, said selection information being the same for all the plurality of base transceiver stations and being an instruction to transmit for the single selected base transceiver station and an instruction not to transmit for each non-selected base transceiver station; the claimed base transceiver station comprising: control means operable, if such selection information is received at its base transceiver station, to examine the received selection information; and transmitter means adapted to transmit said subsequent downlink signal unless it is disabled from transmitting by said control means, such disabling being brought about by the control means if the control means recognises the received selection information as said instruction not to transmit for its base transceiver station, but not being brought about if no selection information is received.

According to a fourth aspect of the present invention there is provided control circuitry for use in a first base transceiver station of a cellular mobile communications network, the network comprising a mobile station which, when the mobile station is capable of receiving a downlink signal from a plurality of base transceiver stations of the network including said first base transceiver station, selects a single base transceiver station of the said plurality to transmit a subsequent such downlink signal to the mobile station and which informs the plurality of base transceiver stations of the selection made using selection information included in one or more uplink signals transmitted by the mobile station to such base transceiver stations, said selection information being the same for all the plurality of base transceiver stations and being an instruction to transmit for the single selected base transceiver station and an instruction not to transmit for each non-selected base transceiver station, and said first base transceiver station having transmitter means adapted to transmit said subsequent downlink signal unless disabled from transmitting by said control circuitry; the control circuitry comprising: control means operable, if such selection information is received at said first base transceiver station, to examine the received selection information and to bring about such disabling of the transmitter means if the control means recognises the received selection information as said instruction not to transmit for said first base transceiver station, but not to bring about such disabling if no selection information is received.

In the present invention, a single BTS is selected by the BTS decision means, so that the candidate selections include, for each BTS of the plurality, a selection in which just that BTS is specified. In one embodiment a further selection is available in which all the BTSs of the plurality are specified.

The present invention is not limited to downlink transmission selection for the purpose of interference reduction. Embodiments of the invention can be used in any situation in which it is desired to prevent at least one BTS in communications range of a mobile station from transmitting a downlink signal to that mobile station.

Reference will now be made, by way of example, to the accompanying drawings, in which:
Figure 1, discussed hereinbefore, shows parts of a cellular mobile telecommunication network according to IS95;
Figure 2, also discussed hereinbefore, shows a schematic view for use in explaining processing of uplink signals in a soft hand-off operation performed by the Figure 1 network;
Figure 3, also discussed hereinbefore, shows a schematic view for use in explaining processing of downlink signals in such a soft hand-off operation;
Figure 4, also discussed hereinbefore, illustrates the format of a time frame in the Figure 1 network;
Figure 5 shows parts of a mobile telecommunication network embodying the present invention;
Figure 6 shows parts of a mobile station for use in the Figure 5 network;
Figure 7 is a detailed block diagram showing parts of the Figure 6 mobile station;
Figure 8 is a flowchart for use in explaining operation of the Figure 6 mobile station;
Figure 9 is a schematic view for illustrating a possible format of a message transmitted by the Figure 6 mobile station; and
Figure 10 shows parts of a base transceiver station embodying the present invention.

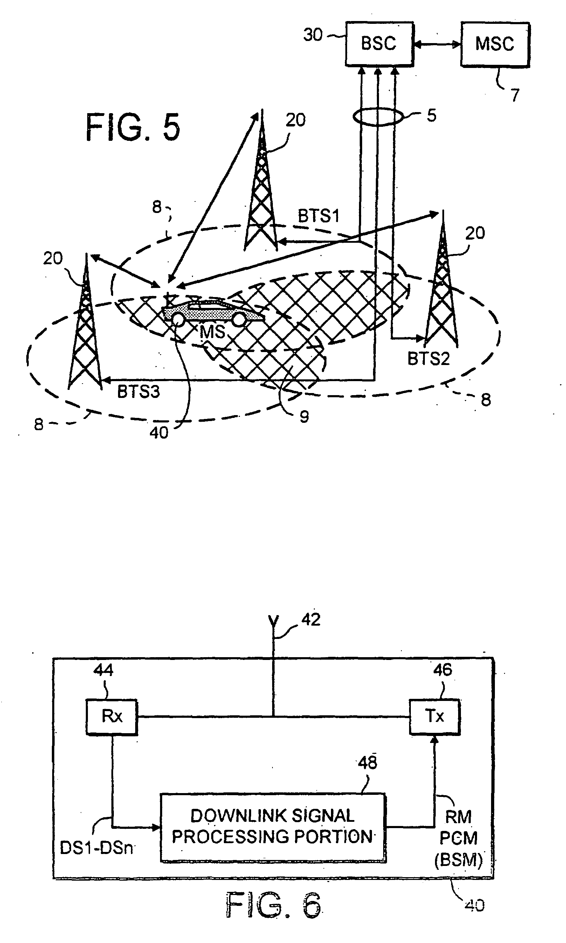

Figure 5 shows parts of a mobile telecommunication network embodying the present invention. In Figure 5, elements that are the same as elements of the Figure 1 network described previously have the same reference numerals and an explanation thereof is omitted.

The Figure 5 network is a wideband CDMA (W-CDMA) network for a proposed new standard for mobile telecommunications, referred to as a universal mobile telecommunications system (UMTS) or UMTS terrestrial radio access (UTRA). This is generally similar to the IS95-standard network described previously, although certain implementation details are yet to be finalised. Details that are different from IS95 include the frame duration, which is 10ms, and the time-slot duration which is 625µs. The overall bit rate is within the range from 8kbits/s to 2Mbits/s. Also downlink power control in W-CDMA is closed-loop and is based on the same principles as the uplink power control.

In Figure 5, each of three base transceiver stations (BTSs) 20 (BTS1, BTS2 and BTS3) is connected via a fixed network 5 to a base station controller (BSC) 30, which is in turn connected to a mobile switching centre (MSC) 7. Each BTS 20 serves a cell 8. A mobile station (MS) 40 is in a soft hand-off (SHO) region 9 and can receive downlink signals from, and transmit uplink signals to, all the BTSs 20 involved in the soft hand-off.

The Figure 5 network corresponds generally with the Figure 1 network, but the MS 40, BTSs 20 and BSC 30 are constructed and operate differently from the corresponding elements in Figure 1.

Figure 6 is a block diagram showing parts of a MS 40 for use in the Figure 5 network. An antenna element 42 is connected (e.g. via a duplexer - not shown) to a receiver portion 44 and a transmitter portion 46. A downlink signal processing portion 48 receives from the receiver portion 44 respective downlink signals DS1 to DSn produced by n BTSs BTS1 to BTSn involved in the soft hand-off operation. The downlink signal processing portion 48 applies a BTS selection message BSM to the transmitter portion 46.

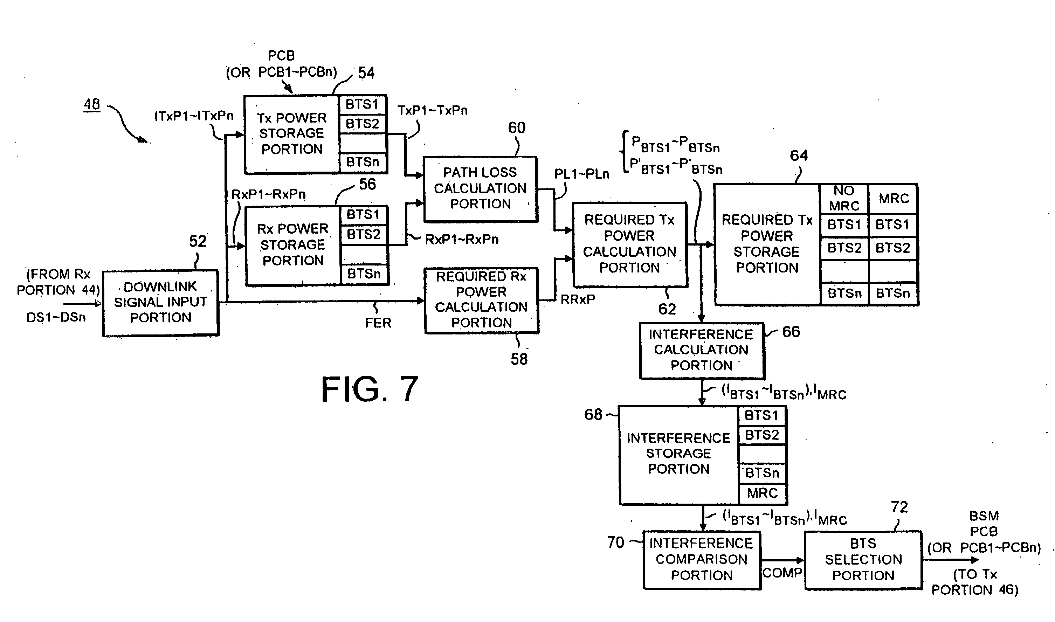

Figure 7 shows a block diagram of the downlink signal processing portion 48. The downlink signal processing portion 48 includes a downlink signal input portion 52 which receives the downlink signals DS1 to DSn from the receiver portion 44. The downlink signal processing portion 48 further includes respective TX and RX power storage portions 54 and 56, each connected to the downlink signal input portion 52. The TX power storage portion 54 receives a single power control bit PCB, or respective power control bits PCB1 to PCBn corresponding respectively to the BTSs involved in the soft hand-off operation, and also receives from the downlink signal input portion 52 initial transmission powers TXP1 to TXPn corresponding respectively to those BTSs.

The downlink signal input portion 52 also applies to the RX power storage portion 56 received power measures RXP1 to RXPn corresponding respectively to the BTSs, each representing the power at which a downlink signal from the corresponding BTS is received by the mobile station.

Each of the power storage portions 54 and 56 includes storage regions corresponding respectively to the different BTSs.

The downlink signal processing portion 48 also includes a required RX power calculation portion 58 which receives a further signal measure FER, representing a downlink frame error rate determined by the mobile station, from the downlink signal input portion 52.

The downlink signal processing portion 48 further includes a path loss calculation portion 60 which receives from the TX power storage portion 54 respective transmit powers TXP1 to TXPn for the different BTSs and also receives respective receive powers RXP1 to RXPn for the different BTSs from the RX power storage portion 56.

The downlink signal processing portion 48 further includes a required TX power calculation portion 62 which receives respective path loss measures PL1 to PLn for the different BTSs from the path loss calculation portion 60 and a required RX power RRXP from the required RX power calculation portion 58.

The downlink signal processing portion 48 further includes a required TX power storage portion 64 and an interference calculation portion 66, both of which receive from the required TX power calculation portion 62 first and second sets of required transmission powers. The first set of required transmission powers P_{BTS1} to P_{BTSn} represent required transmission powers of the different BTSs when the mobile station 40 is not using maximum ratio combining (MRC). The second set of transmission power measures P'_{BTS1} to P'_{BTSn} represent the required transmission powers of the different BTSs when MRC is employed at the MS40. The required TX power storage portion 64 has first and second sets of storage regions corresponding to the two sets of transmission power measures.

The downlink signal processing portion 48 further includes an interference storage portion 68 which receives interference measures I_{BTS1} to I_{BTSn} corresponding respectively to the different BTSs (transmitting alone), as well as a further interference measure I_{MRC} representing interference when all BTSs are used to transmit downlink signals and MRC is performed at the MS 40. The interference storage portion 68 has storage regions corresponding respectively to these different interference measures.

The downlink signal processing portion 48 further includes an interference comparison portion 70 which receives the interference measures I_{BTS1} to I_{BTSn} and I_{MRC} from the interference storage portion 68 and produces a comparison signal COMP which is applied to a BTS selection portion 72. The BTS selection portion 72 produces a BTS selection message (BSM) and a power control bit PCB (or plural PCBs PCB1 to PCBn) which are applied to the transmitter portion 46 of the mobile station 40.

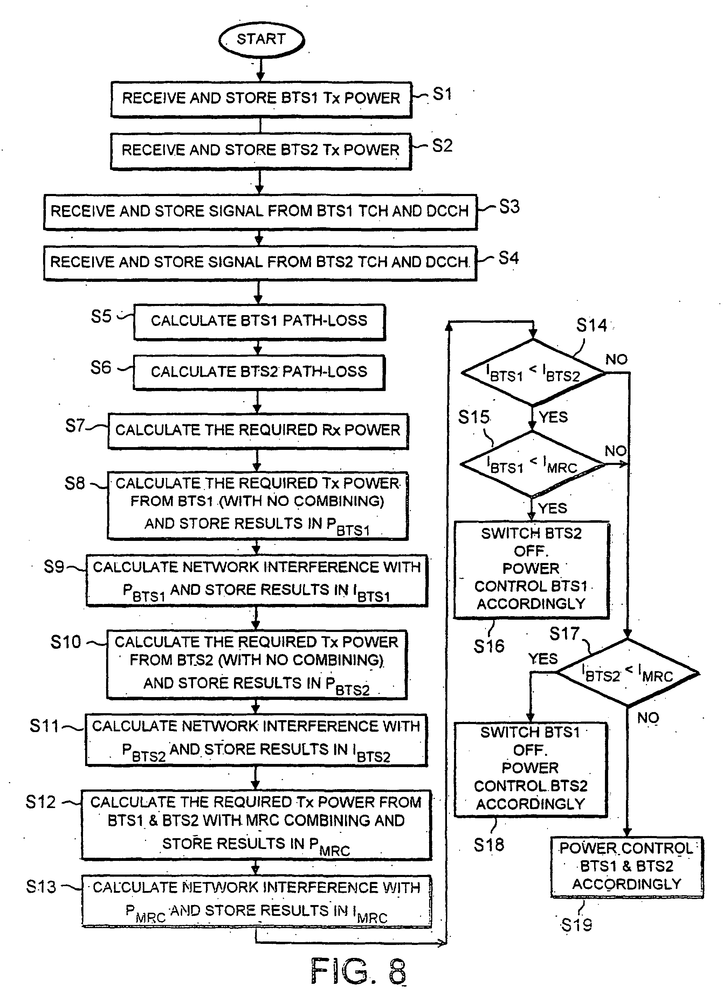

Operation of the mobile station 40 of Figure 7 will now explained with reference to the flowchart of Figure 8. In this example, it will be assumed, for the sake of simplicity, that there are only two BTSs involved in the soft hand-off operation.

In a first step S1 the downlink signal input portion 52 detects, in a downlink signal received from a first one (hereinafter BTS1) of the BTSs involved in the soft hand-off operation, for example a signal on a dedicated control channel DCCH thereof, the initial transmit power ITXP1 of BTS1.

As explained previously, the downlink power control method proposed for use in W-CDMA adjusts the transmission power of the BTSs in communication with a particular MS in dependence upon power control bits PCBs generated by the mobile station. At present, the proposed standard for W-CDMA specifies that a single PCB be used to control the downlink transmit powers of all of the BTSs involved in the soft hand-off operation. Thus, in this case all the involved BTSs increase or reduce their transmission powers together in accordance with the single PCB. However, it is also possible, in an embodiment of the present invention, to allocate each BTS involved in the soft hand-off operation its own individual PCB, enabling the MS to control the downlink transmission powers of the different involved BTSs independently of one another. In this case (as shown in parenthesis in Figure 7) the TX power storage portion 54 receives PCBs PCB1 to PCBn corresponding respectively 10 the different BTSs involved in the soft hand-off operation.

In step S1 the initial transmission power ITXP1 for BTS1 is stored in the storage region allocated to BTS1 in the TX power storage portion 54. Thereafter, each time a new PCB (PCB or PCB1, as the case may be) applicable to BTS1 is generated by the MS (for example every time slot) the TX power storage portion 54 updates the transmission power TXP1 stored in the storage region for BTS1 so that, at any given time, the value stored represents the instantaneous downlink transmission power of BTS1.

In step S2 the initial transmission power ITXP2 for the second BTS (hereinafter BTS2) involved in the soft hand-off operation is detected by the downlink signal input portion 52 in one of the downlink signals received from BTS2 and is stored in the storage region of the TX power storage portion 54 allocated to BTS2. The stored transmission power TXP2 for BTS2 is also updated each time a PCB (PCB or PCB2) applicable to BTS2 is generated by the mobile station.

Next, in step S3, the downlink signal input portion 52 processes the downlink signal DS1 received from BTS1 (either on a traffic channel TCH thereof or on a control channel dedicated control channel DCCH) thereof) and derives therefrom a measure RXP1 of the received power of the downlink signal DS1 concerned. This measure (for example the received signal strength RSS) is stored in the storage region allocated to BTS1 in the RX power storage portion 56.

In step S4 the same operation is performed for BTS2 and the result stored in the storage region allocated to BTS2 in the RX power storage portion 56. Incidentally, in steps S3 and S4, the received power RXP may be calculated from the DCCH downlink signal in the event (as explained later) that the traffic channel TCH from the BTS concerned is switched off.

In step S5 the path loss calculation portion 60 receives from the storage location for BTS1 in the TX power storage portion 54 the stored (and updated) transmission power TXP1 for BTS1, and also receives from the storage region for BTS1 in the RX power storage portion 56 the received power RXP1 for BTS1. The path loss calculation portion 60 subtracts the received power RXP1 from the transmit power TXP1 to determine the path loss PL1 for BTS1. In step S6 the same operations are repeated for BTS2.

In step S7 the required RX power calculation portion 58 determines, based on a predetermined characteristic (e.g. the frame error rate FER) of the received downlink signals as a whole (e.g. after maximum ratio combining MRC), a required RX power RRXP which represents the minimum power that the mobile station presently needs to receive in order to produce an overall downlink signal DS of acceptable quality.

In step S8 the required TX power calculation portion 62 receives the path loss PL1 for BTS1 and the required RX power RRXP. Based on these inputs, it calculates a downlink transmission power P_{BTS1} required from BTS1 assuming that BTS1 is the only BTS permitted to send the downlink signal in the next time slot to the mobile station. This required transmission power P_{BTS1} may be calculated, for example, by adding together PL1 and RRXP. The calculated required downlink transmission power P_{BTS1} is then stored in the TX power storage portion 64 in the storage region allocated to BTS1 in the first set of storage regions thereof (the set relating to the case in which maximum ratio combining (MRC) is not performed in the mobile station).

Then, in step S9, the interference calculation portion 66 receives the required downlink transmission power P_{BTS1} calculated in step S8 and calculates therefrom a measure I_{BTS1} of the amount of network interference that would be caused by BTS1 (alone) operating at the downlink transmission power P_{BTS1}. This measure is stored in an appropriate one of the storage region allocated to BTS1 in the interference storage portion 68.

Next, in steps S10 and steps S11 the processings of steps S8 and S9 are repeated for BTS2. The resulting required downlink transmission power P_{BTS2} and the network-interference measure I_{BTS2} are stored respectively in storage regions allocated to BTS2 in the portions 64 and 68.

In step S12 the required TX power calculation portion 62 calculates, for each of the BTSs BTS1 and BTS2, the required downlink transmission power P'_{BTS1} or P'_{BTS2} assuming that MRC is to be used at the mobile station. These results are stored in storage regions allocated to BTS1 and BTS2 in the second set of storage regions of the required TX power storage portion 64.

In step S13 the interference calculation portion 66 employs the required downlink transmission powers P'_{BTS1} and P'_{BTS2} calculated in step S12 to determine a measure of the network interference that would result assuming that BTS1 is transmitting at P'_{BTS1} and BTS2 is transmitting at P'_{BTS2}· The resulting interference measure I_{MRC} is stored in a further one of the storage regions of the interference storage portion 68.

Next, in step S14 the interference comparison portion 70 compares the interference measures I_{BTS1} and I_{BTS2} retrieved from the interference storage portion 68. If I_{BTS1} is less than I_{BTS2}, processing proceeds to step S15 in which I_{BTS1} is compared with I_{MRC}. If I_{BTS1} < I_{MRC} in step S15, in step S16 the BTS selection portion 72 determines that the downlink signal in the next time slot should be sent to the mobile station by BTS1 alone, on the basis that this will result in the lowest network interference. The BTS selection portion 72 generates a BTS selection message (BSM) specifying that BTS2 is not to transmit the downlink signal in the next time slot. The BSM is delivered to the transmitter portion 46 of the mobile station for transmission to BTS2. At the same time, the BTS selection portion 72 determines the power control bit PCB to be transmitted to BTS1 to control the downlink transmission power of BTS1 in the next time slot so that it has the value P_{BTS1} calculated in step S8. As noted previously, this PCB may be a single PCB common to all BTSs involved in the soft hand-off operation, or a unique PCB (PCB1) for BTS1.

If, in step S14, I_{BTS2} was found to be less than or equal to I_{BTS1'} or if in step S15 I_{MRC} was found to be less than or equal to I_{BTS1}, processing proceeds to step S17. In step S17, the interference comparison portion 70 compares I_{BTS2} with I_{MRC}. If I_{BTS2} is less than I_{MRC} processing proceeds to step S18 in which the BTS selection portion 72 determines that the downlink signal for the mobile station in the next time slot should be transmitted by BTS2 alone, on the basis that BTS2 operating alone will produce the lowest network interference. In this case, the BTS selection portion 72 generates a BSM which instructs BTS1 not to transmit in the next time slot. Also, the PCB applicable to BTS2 is set by the BTS selection portion 72 to control the downlink transmission power of BTS2 to meet the required TX power P_{BTS2} calculated in step S10.

If in step S17 the result of the comparison is that I_{MRC} is less than or equal to T_{BTS2}, processing proceeds to step S19 in which the BTS selection portion 72 determines that both BTS1 and BTS2 should be used to transmit the downlink signal in the next time slot, on the basis that this will result in the lowest network interference. In this case, the BTS selection portion 72 generates a BSM specifying that both BTSs are to transmit in the next time slot, and sets the PCB (or PCBs) to cause the BTSs to transmit the downlink signal in the next time slot at the required transmission powers P'_{BTS1} and P'_{BTS2} calculated in step S12.

Thus, in the example described above it can be seen that three different candidate BTS selections are identified: a first candidate selection in which BTS1 alone is specified for transmitting the downlink signal; a second candidate selection in which BTS2 alone is specified for transmitting the downlink signal; and a third candidate selection in which both BTS1 and BTS2 are specified for transmitting the downlink signal. For each candidate selection, the required transmission power P_{BTS} (or P'_{BTS}) of each BTS specified in the selection is calculated and a measure of the network interference that would result from the specified BTS(s) transmitting is also calculated. These network-interference measures are then employed (e.g. the lowest measure is found by comparison of the measures) to decide which of the candidate selections to use for transmission of the downlink signal, so as to tend to reduce the network interference associated with that transmission.

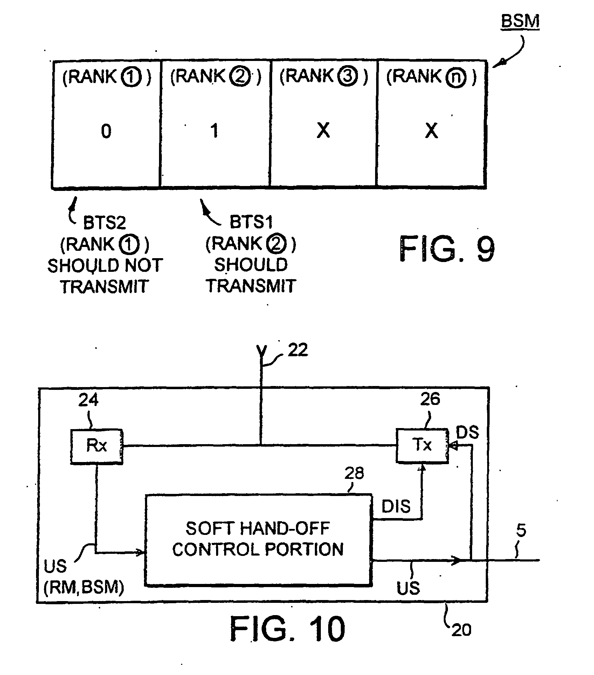

One example of the possible format of the BTS selection message BSM will now be explained with reference to Figure 9.

The BTSs involved in a soft hand-off operation are ranked in some way. For example, the ranking may be carried out in the mobile station based on a predetermined property of the respective downlink signals DS1 to DSn that are received by the MS 40, for example the received signal strength (RSS). Alternatively, the ranking may be on a "first-come first-served" basis, i.e. on the order in which the BTSs became involved in the soft hand-off operation. Alternatively, the ranking could be random. Once the ranking has been determined, the mobile station sends a ranking message RM, indicating the order in which the BTSs are presently ranked, via a control channel to all BTSs.

As shown in Figure 9, the BSM has one bit corresponding to each rank of BTS, and these bits are arranged in the BSM in the ranking order determined by the MS. Take, for example, the case described previously with reference to Figure 8 in which there are only two BTSs involved in the soft hand-off operation, namely BTS1 and BTS2. Assume also that, in the order of ranking determined by the mobile station, BTS2 is the highest-ranked BTS (rank ①, and that the other BTS, BTS1, has rank ②. Assume also that the outcome of the comparisons of the interference measures is the outcome shown in S16, namely that BTS2 should not transmit the downlink signal in the next time slot. To communicate this result to the BTSs involved in the soft hand-off operation, the first bit (corresponding to rank ①) in the BSM is set to 0, to indicate that BTS2 should not transmit the downlink signal in the next time slot. The second bit of the BSM (which corresponds to the rank-② BTS) is set to 1, to indicate that the rank-② BTS, BTS1, should transmit the downlink signal in the next time slot. Any remaining bits of the BSM can be set to a. "don't-care" state, since in this example only two BTSs are involved in the soft hand-off operation. Incidentally, the BSM in this case could consist of two bits only, of course.

The ranking of a BTS may periodically require updating, for several reasons. Firstly, as the MS 40 moves, a downlink signal may be received from a new BTS or an existing BTS may no longer may able to provide a detectable downlink signal. Secondly, the qualities of the signals received from the BTSs 20 may have changed, e.g. due to fading. Thus, from time to time a ranking update is required. Such an update may be carried out periodically at regular time intervals (for example every several hundred milliseconds as in GSM networks), or every frame or even every time slot. Alternatively, the ranking could be updated only when a new BTS is detected or contact with an existing one lost.

Figure 10 is a block diagram showing parts of a BTS 20 embodying the present invention. This BTS 20 is specially adapted to receive and process the ranking message RM and the BTS selection message BSM sent by the MS 40 of Figure 6.

An antenna element 22 is connected (e.g. via a duplexer - not shown) to a receiver portion 24 and a transmitter portion 26. A soft hand-off control portion 28 receives an uplink signal US from the receiver portion 24, and in turn applies the received US (or a signal derived therefrom) to the fixed network 5 for transmission to the BSC 30. The transmitter portion 26 receives a downlink signal DS via the connection line 5 from the BSC 30 (Figure 5) and a disabling signal DIS from the soft hand-off control portion 28.

In use of the BTS 20, the uplink signals sent by the MS 40 when it is in the soft hand-off region 9 include, from time to time, a ranking message RM. The uplink signals US detected by the receiver portion 24 in the BTS 20 are applied to the soft hand-off control portion 28. When the soft hand-off control portion 28 detects that a ranking message RM is included in one of the uplink signals US received thereby, it processes the ranking message concerned to determine the rank of its BTS within the ranking order determined by the MS. In each time slot, the uplink signals US produced by the receiver portion 24 also include a BTS selection message BSM determined by the MS 40 as described above. Operation of the soft hand-off control portion 28 in response to the presence of such a BSM in the uplink signal US produced by the receiver portion 24 will now be described.

It is assumed that, by the time the BSM is received, a ranking message RM has already been received and processed (as indicated above) by the soft hand-off control portion 28.

The BSM is supplied by the receiver portion 24 to the soft hand-off control portion 28 where is examined. The soft hand-off control portion 28 checks the rank of its BTS based on the last-received ranking message and then examines the bit corresponding to that rank in the BSM. If the bit is 0 the soft hand-off control portion 28 applies a disabling signal DIS to the transmitter portion 26 to prevent it from transmitting the downlink signal in the next time slot.

The measure of network interference I_{BTS1}, I_{BTS2} or I_{MRC} can be calculated as follows by considering the interference that would be experienced by an imaginary mobile station, other than the subject mobile station, operating in the soft hand-off region (Figure 5), as a consequence of the BTS(s) concerned transmitting at the determined required transmission power(s). In the case of I_{BTS1}, for example, the interference is calculated based on the required transmission power P_{BTS1} from BTS₁ to the subject mobile station and the associated mean path loss experienced by the imaginary mobile station (which is the same as for the subject mobile station). This mean path loss is a time-averaged path loss for which the averaging period is chosen so as to average out (or ideally eliminate) the effects of Rayleigh fading. In other words, the path loss variation due to Rayleigh fading is averaged out.

In the case of I_{MRC} the interference is calculated based on the cumulative sum of the respective carrier power levels of BTS1 and BTS2 at the antenna of the imaginary mobile station. Again, these carrier power levels are calculated based on the required transmission powers P'_{BTS1} and P'_{BTS2} for BTS1 and BTS2 when MRC is used and the respective mean path losses which have already been established at the subject mobile station (and are assumed to be the same for the imaginary mobile station).

Take, for example, a situation in which the downlink signal from BTS2 is undergoing a deep fade. This means that PL2 will be large relative to PL1. In this case, the required transmission power P_{BTS2} for BTS2 will be large as compared to the required transmission power BTS1 for BTS1. Thus, I_{BTS2} will be large relative to I_{BTS1}. Also, in view of the large PL2, P'_{BTS2} will also be large so that I_{MRC} will be larger than I_{BTS1}· Accordingly, the decision is made that BTS2 should not transmit the downlink signal in the next time slot, so as to reduce the network interference resulting from transmission of that downlink signal.

In the embodiment described above, the TX power storage portion 54 receives the initial downlink transmission powers of the involved BTSs and then updates these as necessary on receipt of the power control bits PCBs for the different BTSs. However, it would also be possible for the instantaneous downlink transmission powers TXP themselves to be supplied directly to the TX power storage portion 54 in each time slot in place of the PCBs.

It will also be understood that the way in which the transmission powers TXP (or IXTP + ∑PCB) and receive powers RXP are made available to the MS is not critical to the invention. For example, it is not necessary for the MS to rank the BTSs. All that is necessary is that each BTS is able to identify to which BTS a particular received value (e.g. ITXP or RXP) relates. Such identification could be carried out in many different ways other than ranking.

It will also be understood that it is not necessary for the processing shown in Figure 8 to take place every time slot. It would be possible for the signals such as RXP and PCM to be transmitted only once per frame, in which case the decision-making would be made on a frame-by-frame basis.

Furthermore, it would be possible for the decisions to be made at time intervals other than frames or time slots, for example based on a time interval consistent with the fading characteristics of the RF channels in the network.

Although the present invention has been described above in relation to the proposed European wideband CDMA system (UTRA) it will be appreciated that it can also be applied to a system otherwise in accordance with the IS95 standard. It would also be possible to apply the invention in other cellular networks not using CDMA, for example networks using one or more of the following: multiple-access techniques: time-division multiple access (TDMA), wavelength-division multiple access (WDMA), frequency-division multiple access (FDMA) and space-division multiple access (SDMA).

## Claims

1. A cellular mobile communications network comprising a mobile station (40) having:
base transceiver station decision means (48) operable, when the mobile station is capable of receiving a downlink signal (DS1-DSn) from a plurality of base transceiver stations of the network (BTS1-BTSn), to determine that at least one of the base transceiver stations of the said plurality is not to transmit a subsequent such downlink signal to the mobile station; and
base transceiver station informing means (46) operable to inform the plurality of base transceiver stations of the determination made by the said base transceiver station decision means using one or more uplink signals (US) transmitted by the mobile station to such base transceiver stations;
**characterised in that**:
the decision means (48) are operable to select a single base transceiver station to transmit said subsequent downlink signal;
the informing means (46) generate selection information which is the same for all the plurality of base transceiver stations and is an instruction to transmit ("1") for the single selected base transceiver station and an instruction not to transmit ("0") for each non-selected base transceiver station;
each base transceiver station has control means (28) which, if such selection information (BSM) is received at its base transceiver station, examine the received selection information; and
each base transceiver station transmits said subsequent downlink signal unless it is disabled from transmitting by its said control means, and such disabling is brought about by the control means if the control means recognises the received selection information (BSM) as said instruction not to transmit ("0") for its base transceiver station, but is not brought about if no selection information is received.

2. A network as claimed in claim 1, wherein the base transceiver station decision means (48) measures a received power (RXP1-n) of each downlink signal.

3. A network as claimed in any preceding claim, wherein the mobile station is capable of operating in either a first mode (NO MRC), in which a single selected base transceiver station of the plurality of base transceiver stations is to transmit the subsequent downlink signal to the mobile station, or a second mode (MRC) in which all of the plurality of base transceiver stations are to transmit the subsequent downlink signal to the mobile station.

4. A network as claimed in claim 3, further comprising a base station controller (30), operatively connected to the plurality of base transceiver stations (20), for delivering the downlink signals to the plurality of base transceiver stations.

5. A network as claimed in claim 4, wherein the base station controller selects one of the operation modes from among the first mode (NO MRC) and the second mode (MRC).

6. A network as claimed in claim 3, 4 or 5, wherein, in the second mode (MRC), the mobile station combines the respective downlink signals received from the plurality of base transceiver stations to obtain a combined downlink signal.

7. A network as claimed in any preceding claim, wherein the mobile station is operable to provide each base transceiver station with a different identity (RANK ①~n) for use to prepare the selection information (BSM) transmitted from the mobile station.

8. A network as claimed in any preceding claim, wherein the plurality of base transceiver stations are involved in a soft hand-off operation of the network.

9. A method of selecting a base transceiver station in a cellular mobile communications network, in which method:
when a mobile station of the network is capable of receiving a downlink signal (DS1-DSn) from a plurality of base transceiver stations of the network (BTS1-BTSn), the mobile station determines that at least one of the base transceiver stations of the said plurality is not to transmit a subsequent such downlink signal to the mobile station; and
the mobile station informs the plurality of base transceiver stations of the determination made using one or more uplink signals (US) transmitted by the mobile station to such base transceiver stations;
**characterised in that**:
the mobile station selects a single base transceiver station to transmit said subsequent downlink signal;
the mobile station (46) generates selection information which is the same for all the plurality of base transceiver stations and is an instruction to transmit ("1") for the single selected base transceiver station and an instruction not to transmit ("0") for each non-selected base transceiver station;
each base transceiver station examines such selection information (BSM) if received at its base transceiver station; and
each base transceiver station transmits said subsequent downlink signal unless it is disabled from transmitting, and such disabling is brought about if the base transceiver station recognises the received selection information (BSM) as said instruction not to transmit ("0") for its base transceiver station, but is not brought about if no selection information is received.

10. A method as claimed in claim 9, wherein the mobile station measures a received power (RXP1-n) of each downlink signal.

11. A method as claimed in claim 9 or 10, further comprising:
operating in either a first mode (NO MRC), in which a single selected base transceiver station of the plurality of base transceiver stations is to transmit the subsequent downlink signal to the mobile station, or a second mode (MRC), in which all of the plurality of base transceiver stations are to transmit the subsequent downlink signal to the mobile station.

12. A method as claimed in claim 11, further comprising:
switching between the first and second modes.

13. A method as claimed in claim 11 or 12, further comprising:
at the mobile station, combining the respective downlink signals (DS1-DSn) received from the plurality of base transceiver stations to obtain a combined downlink signal when operating in the second mode.

14. A method as claimed in any one of claims 9 to 13, wherein the plurality of base transceiver stations are involved in a soft hand-off operation of the network.

15. A base transceiver station for use in a cellular mobile communications network comprising a mobile station (40) which, when the mobile station is capable of receiving a downlink signal (DS1-DSn) from a plurality of base transceiver stations of the network (BTS1-BTSn) including the claimed base transceiver station, selects a single base transceiver station of the said plurality to transmit a subsequent such downlink signal to the mobile station and which informs the plurality of base transceiver stations of the selection made using selection information included in one or more uplink signals (US) transmitted by the mobile station to such base transceiver stations, said selection information being the same for all the plurality of base transceiver stations and being an instruction to transmit ("1") for the single selected base transceiver station and an instruction not to transmit ("0") for each non-selected base transceiver station;
the claimed base transceiver station comprising:
control means (28) operable, if such selection information (BSM) is received at its base transceiver station, to examine the received selection information; and
transmitter means (26) adapted to transmit said subsequent downlink signal unless disabled from transmitting by said control means, such disabling being brought about by the control means if the control means recognises the received selection information (BSM) as said instruction not to transmit ("0") for its base transceiver station, but not being brought about if no selection information is received.

16. Control circuitry for use in a first base transceiver station of a cellular mobile communications network, the network comprising a mobile station (40) which, when the mobile station is capable of receiving a downlink signal (DS1-DSn) from a plurality of base transceiver stations of the network (BTS1-BTSn) including said first base transceiver station, selects a single base transceiver station of the said plurality to transmit a subsequent such downlink signal to the mobile station and which informs the plurality of base transceiver stations of the selection made using selection information included in one or more uplink signals (US) transmitted by the mobile station to such base transceiver stations, said selection information being the same for all the plurality of base transceiver stations and being an instruction to transmit ("1") for the single selected base transceiver station and an instruction not to transmit ("0") for each non-selected base transceiver station, and said first base transceiver station having transmitter means (26) adapted to transmit said subsequent downlink signal unless disabled from transmitting by said control circuitry;
the control circuitry comprising:
control means (28) operable, if such selection information (BSM) is received at said first base transceiver station, to examine the received selection information and to bring about such disabling of the transmitter means if the control means recognises the received selection information (BSM) as said instruction not to transmit ("0") for said first base transceiver station, but not to bring about such disabling if no selection information is received.

## Patentansprüche

1. Zellulares Mobilkommunikationsnetzwerk, enthaltend eine Mobilstation (40) mit:
Basistransceiverstation-Entscheidungseinrichtungen (48), die betreibbar sind, um, wenn die Mobilstation in der Lage ist, ein Downlink-Signal (DS1 - DSn) von einer Mehrzahl von Transceiverstationen des Netzwerks (BTS1 - BTSn) zu empfangen, zu bestimmen, dass wenigstens eine der Basistransceiverstationen der Mehrzahl nicht ein nachfolgendes solches Downlink-Signal zu der Mobilstation zu übertragen hat; und
Basistransceiverstation-Informiereinrichtungen (46), die betreibbar sind, um die Mehrzahl von Basistransceiverstationen unter Verwendung von einem oder mehreren Uplink-Signal(en) (US), das/die von der Mobilstation zu solchen Basistransceiverstationen übertragen wurde(n), über die Bestimmung zu informieren, die durch die Basistransceiverstation-Entscheidungseinrichtungen durchgeführt wurde;
**dadurch gekennzeichnet, dass**:
die Entscheidungseinrichtungen (48) betreibbar sind, um eine einzelne Basistransceiverstation auszuwählen, um das nachfolgende Downlink-Signal zu übertragen;
die Informiereinrichtungen (46) Auswahlinformationen erzeugen, die für alle der Mehrzahl von Basistransceiverstationen dieselben sind und ein Befehl zum Übertragen ("1") für die einzelne ausgewählte Basistransceiverstation und ein Befehl zum Nicht-Übertragen ("0") für jede nicht ausgewählte Basistransceiverstation sind;
jede Basistransceiverstation Steuereinrichtungen (28) enthält, die, wenn solche Auswahlinformationen (BSM) an ihrer Basistransceiverstation empfangen werden, die empfangenen Auswahlinformationen untersuchen; und
jede Basistransceiverstation das nachfolgende Downlink-Signal überträgt, solange es nicht durch ihre Steuereinrichtungen gegen ein Übertragen gesperrt ist, und eine solche Sperrung von den Steuereinrichtungen bewirkt wird, wenn die Steuereinrichtungen die empfangenen Auswahlinformationen (BSM) als den Befehl zum Nicht-Übertragen ("0") für ihre Basistransceiverstation erkennen, aber nicht bewirkt wird, wenn keine Auswahlinformationen empfangen werden.

2. Netzwerk nach Anspruch 1, wobei die Basistransceiverstation-Entscheidungseinrichtungen (48) eine Empfangsleistung (RXP1-n) jedes Downlink-Signals messen.

3. Netzwerk nach einem der vorhergehenden Ansprüche, wobei die Mobilstation in der Lage ist, in entweder einem ersten Modus (KEIN MRC), in welchem eine einzelne ausgewählte Basistransceiverstation der Mehrzahl von Basistransceiverstationen das nachfolgende Downlink-Signal zu der Mobilstation übertragen soll, oder einem zweiten Modus (MRC) arbeitet, in welchem alle der Mehrzahl von Basistransceiverstationen das nachfolgende Downlink-Signal zu der Mobilstation übertragen sollen.

4. Netzwerk nach Anspruch 3, ferner enthaltend eine Basisstationsteuerung (30), die operativ an die Mehrzahl von Basistransceiverstationen (20) angeschlossen ist, um die Downlink-Signale zu der Mehrzahl von Basistransceiverstationen zu liefern.

5. Netzwerk nach Anspruch 4, wobei die Basisstationsteuerung einen der Betriebsmodi aus dem ersten Modus (KEIN MRC) und dem zweiten Modus (MRC) auswählt.

6. Netzwerk nach Anspruch 3, 4 oder 5, wobei in dem zweiten Modus (MRC) die Mobilstation die jeweiligen Downlink-Signale, die von der Mehrzahl von Basistransceiverstationen empfangen wurden, kombiniert, um ein kombiniertes Downlink-Signal zu erhalten.

7. Netzwerk nach einem der vorhergehenden Ansprüche, wobei die Mobilstation betreibbar ist, um jeder Basistransceiverstation mit einer unterschiedlichen Identität (RAN ①~n) zur Verwendung zur Vorbereitung der Auswahlinformationen (BSM) zu versehen, die von der Mobilstation übertragen wurden.

8. Netzwerk nach einem der vorhergehenden Ansprüche, wobei die Mehrzahl von Basistransceiverstationen in eine Weichumschaltoperation des Netzwerks involviert ist.

9. Verfahren zum Auswählen einer Basistransceiverstation in einem zellularen Mobilkommunikationsnetzwerk, bei welchem verfahren:
wenn eine Mobilstation des Netzwerks in der Lage ist, ein Downlink-Signal (D51 - DSn) von einer Mehrzahl von Basistransceiverstationen des Netzwerks (BTS1 - BTSn) zu empfangen, die Mobilstation bestimmt, dass wenigstens eine der Basistransceiverstationen der Mehrzahl nicht ein nachfolgendes solches Downlink-Signal zu der Mobilstation zu übertragen hat; und
die Mobilstation die Mehrzahl von Basistransceiverstationen über die erfolgte Bestimmung informiert unter Verwendung von einem oder mehreren Uplink-signal(en) (US), das/die von der Mobilstation zu solchen Basistransceiverstationen übertragen wurde (n);
**dadurch gekennzeichnet, dass**:
die Mobilstation eine einzelne Basistransceiverstation auswählt, um das nachfolgende Downlink-Signal zu übertragen;
die Mobilstation (46) Auswahlinformationen erzeugt, die für alle der Mehrzahl von Basistransceiverstationen dieselben sind und ein Befehl zum Übertragen ("1") für die einzelne ausgewählte Basistransceiverstation und ein Befehl zum Nicht-Übertragen ("0") für jede nicht ausgewählte Basistransceiverstation sind;
jede Basistransceiverstation solche Auswahlinformationen (BSM) untersucht, wenn sie an ihrer Basistransceiverstation empfangen wurden; und
jede Basistransceiverstation das nachfolgende Downlink-Signal überträgt, solange es nicht gegen ein Übertragen gesperrt ist, und eine solche Sperrung bewirkt wird, wenn die Basistransceiverstation die empfangenen Auswahlinformationen (BSM) als den Befehl erkennt, für ihre Basistransceiverstation nicht zu übertragen ("0"), aber nicht bewirkt wird, wenn keine Auswahlinformationen empfangen werden.

10. Verfahren nach Anspruch 9, wobei die Mobilstation eine Empfangsleistung (RXP1-n) von jedem Downlink-Signal misst.

11. Verfahren nach Anspruch 9 oder 10, ferner enthaltend:
Arbeiten in entweder einem ersten Modus (KEIN MRC), in welchem eine einzelne ausgewählte Basistransceiverstation der Mehrzahl von Basistransceiverstationen das nachfolgende Downlink-Signal zu der Mobilstation übertragen soll, oder einem zweiten Modus (MRC), in welchem alle der Mehrzahl von Basistransceiverstationen das nachfolgende Downlink-Signal zu der Mobilstation übertragen sollen.

12. Verfahren nach Anspruch 11, ferner enthaltend:
Schalten zwischen den ersten und zweiten Modi.

13. Verfahren nach Anspruch 11 oder 12, ferner enthaltend:
bei der Mobilstation ein Kombinieren der jeweiligen Downlink-Signale (DS1 - DSn), die von der Mehrzahl von Basistransceiverstationen empfangen wurden, um ein kombiniertes Downlink-Signal zu erhalten, wenn im zweiten Modus gearbeitet wird.

14. verfahren nach einem der Ansprüche 9 bis 13, wobei die Mehrzahl von Basistransceiverstationen in einen Weichumschaltbetrieb des Netzwerkes involviert ist.

15. Basistransceiverstation zur Verwendung in einem zellularen Mobilkommunikationsnetzwerk, enthaltend eine Mobilstation (40), die, wenn die Mobilstation in der Lage ist, ein Downlink-Signal (DS1 - DSn) von einer Mehrzahl von Basistransceiverstationen des Netzwerks (BTS1 - BTSn) zu empfangen, einschließlich der beanspruchten Basistransceiverstation, eine einzelne Basistransceiverstation der Mehrzahl auswählt, um ein nachfolgendes solches Downlink-Signal zu der Mobilstation zu übertragen, und die die Mehrzahl von Basistransceiverstationen über die durchgeführte Auswahl informiert unter Verwendung von Auswahlinformationen, die in einem oder mehreren Uplink-Signal(en) (US) enthalten sind, das/die von der Mobilstation zu solchen Basistransceiverstationen übertragen wurde(n), welche Auswahlinformationen für alle der Mehrzahl von Basistransceiverstationen dieselben sind und ein Befehl zum Übertragen von ("1") für die einzelne ausgewählte Basistransceiverstation und ein Befehl zum Nicht-Übertragen ("0") für jede nicht ausgewählte Basistransceiverstation sind;
welche beanspruchte Basistransceiverstation enthält:
Steuereinrichtungen (28), die betreibbar sind, wenn solche Auswahlinformationen (BSM) an ihrer Basistransceiverstation empfangen werden, um die empfangenen Auswahlinformationen zu untersuchen; und
Übertragungseinrichtungen (26), die ausgelegt sind, um das nachfolgende Downlink-Signal zu übertragen, solange sie nicht gegen ein Übertragen von den Steuereinrichtungen gesperrt sind, welches solche Sperren von den Steuereinrichtungen bewirkt wird, wenn die Steuereinrichtungen die empfangenen Auswahlinformationen (BSM) als den Befehl, nicht zu übertragen ("0"), für ihre Basistransceiverstation erkennen, aber nicht bewirkt wird, wenn keine Auswahlinformationen empfangen werden.

16. Steuerschaltung zur Verwendung bei einer ersten Basistransceiverstation eines zellularen Mobilkommunikationsnetzwerks, welches Netzwerk eine Mobilstation (40) enthält, die, wenn die Mobilstation in der Lage ist, ein Downlink-Signal (DS1 - DSn) von einer Mehrzahl von Basistransceiverstationen des Netzwerks (BTS1 - BTSn) zu empfangen, einschließlich der ersten Basistransceiverstation, eine einzelne Basistransceiverstation von der Mehrzahl auswählt, um ein nachfolgendes solches Downlink-Signal zu der Mobilstation zu übertragen, und die die Mehrzahl von Basistransceiverstationen über die durchgeführte Auswahl informiert unter Verwendung von Auswahlinformationen, die in einem oder mehreren Uplink-Signal(en) (US) enthalten sind, das/die von der Mobilstation zu solchen Basistransceiverstationen übertragen wurde(n), welche Auswahlinformationen für alle der Mehrzahl von Basistransceiverstationen dieselben sind und ein Befehl zum Übertragen ("1") für die einzelne ausgewählte Basistransceiverstation und ein Befehl zum Nicht-Übertragen ("0") für jede nicht ausgewählte Basistransceiverstation sind, und welche erste Basistransceiverstation Übertragereinrichtungen (26) hat, die ausgelegt sind, um das nachfolgende Downlink-Signal zu übertragen, so lange sie nicht gegen ein Übertragen von der Steuerschaltung gesperrt werden;
welche Steuerschaltung enthält:
Steuereinrichtungen (28), die betreibbar sind, wenn solche Auswahlinformationen (BSM) an der ersten Basistransceiverstation empfangen werden, um die empfangenen Auswahlinformationen zu untersuchen und ein solches Sperren der Übertragungseinrichtungen zu bewirken, wenn die Steuereinrichtungen die empfangenen Auswahlinformationen (BSM) als den Befehl zum Nicht-Übertragen ("0") für die erste Basistransceiverstation erkennen, aber ein solches Sperren nicht bewirken, wenn keine Auswahlinformationen empfangen werden.

## Revendications

1. Réseau de communication mobile cellulaire comprenant une station mobile (40) qui comporte :
un moyen de décision de station d'émetteur-récepteur de base (48) qui peut fonctionner, lorsque la station mobile peut recevoir un signal de liaison descendante (DS1-DSn) depuis une pluralité de stations d'émetteur de base du réseau (BTS1-BTSn), pour déterminer qu'au moins l'une des stations d'émetteur-récepteur de base de ladite pluralité ne va pas transmettre un signal de liaison descendante qui suit sur la station mobile ; et
un moyen d'information de station d'émetteur-récepteur de base (46) qui peut fonctionner pour informer la pluralité de stations d'émetteur-récepteur de base de la détermination qui est réalisée par ledit moyen de décision de station d'émetteur-récepteur de base en utilisant un ou plusieurs signaux de liaison montante (US) qui sont transmis par la station mobile sur ces stations d'émetteur-récepteur de base,
**caractérisé en ce que** :
le moyen de décision (48) peut fonctionner pour sélectionner une unique station d'émetteur-récepteur de base pour transmettre ledit signal de liaison descendante qui suit ;
le moyen d'information (46) génère une information de sélection qui est la même pour toutes les stations de la pluralité de stations d'émetteur-récepteur de base et qui est une instruction pour transmettre ("1") pour l'unique station d'émetteur-récepteur de base sélectionnée et une instruction pour ne pas transmettre ("0") pour chaque station d'émetteur-récepteur de base non sélectionnée ;
chaque station d'émetteur-récepteur de base comporte un moyen de commande (28) qui, si une telle information de sélection (BSM) est reçue au niveau de sa station d'émetteur-récepteur de base, examine l'information de sélection reçue ; et
chaque station d'émetteur-récepteur de base transmet ledit signal de liaison descendante qui suit sauf si elle est empêchée de transmettre au moyen de son dit moyen de commande, et cette invalidation est induite par le moyen de commande si le moyen de commande reconnaît que l'information de sélection reçue (BSM) en tant que dite instruction pour ne pas transmettre ("0") pour sa station d'émetteur-récepteur de base mais n'est pas induite si aucune information de sélection n'est reçue.

2. Réseau selon la revendication 1, dans lequel le moyen de décision de station d'émetteur-récepteur de base (48) mesure une puissance reçue (RXP1-n) de chaque signal de liaison descendante.

3. Réseau selon l'une quelconque des revendications précédentes, dans lequel la station mobile peut fonctionner dans soit un premier mode (NO MRC) dans lequel une unique station d'émetteur-récepteur de base sélectionnée de la pluralité de stations d'émetteur-récepteur de base doit transmettre le signal de liaison descendante qui suit sur la station mobile, soit un second mode (MRC) dans lequel toutes les stations de la pluralité de stations d'émetteur-récepteur de base doivent transmettre le signal de liaison descendante qui suit sur la station mobile.

4. Réseau selon la revendication 3, comprenant en outre un contrôleur de station de base (30) qui est connecté en fonctionnement à la pluralité de stations d'émetteur-récepteur de base (20) pour délivrer les signaux de liaison descendante sur la pluralité de stations d'émetteur-récepteur de base.

5. Réseau selon la revendication 4, dans lequel le contrôleur de station de base sélectionne l'un des modes de fonctionnement pris parmi le premier mode (NO MRC) et le second mode (MRC).

6. Réseau selon la revendication 3, 4 ou 5, dans lequel, dans le second mode (MRC), la station mobile combine les signaux de liaison descendante respectifs qui sont reçus depuis la pluralité de stations d'émetteur-récepteur de base pour obtenir un signal de liaison descendante combiné.

7. Réseau selon l'une quelconque des revendications précédentes, dans lequel la station mobile peut fonctionner pour appliquer à chaque station d'émetteur-récepteur de base une identité différente (RANK1 à n) pour une utilisation pour préparer l'information de sélection (BSM) qui est transmise depuis la station mobile.

8. Réseau selon l'une quelconque des revendications précédentes, dans lequel les stations de la pluralité de stations d'émetteur-récepteur de base sont mises en jeu dans une opération de transfert logique du réseau.

9. Procédé de sélection d'une station d'émetteur-récepteur de base dans un réseau de communication mobile cellulaire, procédé selon lequel :
lorsqu'une station mobile du réseau peut recevoir un signal de liaison descendante (DS1-DSn) en provenance d'une pluralité de stations d'émetteur-récepteur de base du réseau (BTS1-BTSn), la station mobile détermine qu'au moins l'une des stations d'émetteur-récepteur de base de ladite pluralité ne doit pas transmettre un tel signal de liaison descendante qui suit sur la station mobile ; et
la station mobile informe la pluralité de stations d'émetteur-récepteur de base de la détermination qui est réalisée en utilisant un ou plusieurs signaux de liaison montante (US) qui sont transmis par la station mobile sur ces stations d'émetteur-récepteur de base,
**caractérisé en ce que** :
la station mobile sélectionne une unique station d'émetteur-récepteur de base pour transmettre ledit signal de liaison descendante qui suit ;
la station mobile (46) génère une information de sélection qui est la même pour toutes les stations de la pluralité de stations d'émetteur-récepteur de base et qui est une instruction pour transmettre ("1") pour l'unique station d'émetteur-récepteur de base sélectionnée et une instruction pour ne pas transmettre ("0") pour chaque station d'émetteur-récepteur de base non sélectionnée ;
chaque station d'émetteur-récepteur de base examine cette information de sélection (BSM) si elle est reçue au niveau de sa station d'émetteur-récepteur de base ; et
chaque station d'émetteur-récepteur de base transmet ledit signal de liaison descendante qui suit sauf si elle est empêchée de transmettre, et cet empêchement est induit si la station d'émetteur-récepteur de base reconnaît l'information de sélection reçue (BSM) en tant que dite instruction pour ne pas transmettre ("0") pour sa station d'émetteur-récepteur de base mais n'est pas induit si aucune information de sélection n'est reçue.

10. Procédé selon la revendication 9, dans lequel la station mobile mesure une puissance reçue (RXP1-n) de chaque signal de liaison descendante.

11. Procédé selon la revendication 9 ou 10, comprenant en outre :
le fonctionnement dans soit un premier mode (NO MRC) dans lequel une unique station d'émetteur-récepteur de base sélectionnée de la pluralité de stations d'émetteur-récepteur de base doit transmettre le signal de liaison descendante qui suit sur la station mobile, soit un second mode (MRC) dans lequel toutes les stations de la pluralité de stations d'émetteur-récepteur de base doivent transmettre le signal de liaison descendante qui suit sur la station mobile.

12. Procédé selon la revendication 11, comprenant en outre une commutation entre les premier et second modes.

13. Procédé selon la revendication 11 ou 12, comprenant en outre :
au niveau de la station mobile, la combinaison des signaux de liaison descendante respectifs (DS1-DSn) qui sont reçus depuis la pluralité de stations d'émetteur-récepteur de base pour obtenir un signal de liaison descendante combiné lors d'un fonctionnement dans le second mode.

14. Procédé selon l'une quelconque des revendications 9 à 13, dans lequel les stations de la pluralité de stations d'émetteur-récepteur de base sont mises en jeu au niveau d'une opération de transfert logique du réseau.

15. Station d'émetteur-récepteur de base pour une utilisation dans un réseau de communication mobile cellulaire comprenant une station mobile (40) qui, lorsque la station mobile peut recevoir un signal de liaison descendante (DS1-DSn) depuis une pluralité de stations d'émetteur-récepteur de base du réseau (BTS1-BTSn) incluant la station d'émetteur-récepteur de base revendiquée, sélectionne une unique station d'émetteur-récepteur de base de ladite pluralité pour transmettre ce signal de liaison descendante qui suit sur la station mobile et qui informe la pluralité de stations d'émetteur-récepteur de base de la sélection qui est réalisée en utilisant une information de sélection qui est incluse dans un ou plusieurs signaux de liaison montante (US) qui sont transmis par la station mobile sur ces stations d'émetteur-récepteur de base, ladite information de sélection étant la même pour toutes les stations de la pluralité de stations d'émetteur-récepteur de base et étant une instruction pour transmettre ("1") pour l'unique station d'émetteur-récepteur de base sélectionnée et une instruction pour ne pas transmettre ("0") pour chaque station d'émetteur-récepteur de base non sélectionnée ;
la station d'émetteur-récepteur de base revendiquée comprenant :
un moyen de commande (28) qui peut fonctionner, si cette information de sélection (BSM) est reçue au niveau de sa station d'émetteur-récepteur de base, pour examiner l'information de sélection reçue ; et
un moyen d'émetteur (26) qui est adapté pour émettre ledit signal de liaison descendante qui suit sauf s'il est empêché d'émettre par ledit moyen de commande, cet empêchement étant induit par le moyen de commande si le moyen de commande reconnaît l'information de sélection reçue (BSM) en tant que dite instruction pour ne pas transmettre ("0") pour sa station d'émetteur-récepteur de base mais n'étant pas induit si aucune information de sélection n'est reçue.

16. Circuit de commande pour une utilisation dans une première station d'émetteur-récepteur de base d'un réseau de communication mobile cellulaire, le réseau comprenant une station mobile (40) qui, lorsque la station mobile peut recevoir un signal de liaison descendante (DS1-DSn) en provenance d'une pluralité de stations d'émetteur-récepteur de base du réseau (BTS1-BTSn) incluant ladite première station d'émetteur-récepteur de base, sélectionne une unique station d'émetteur-récepteur de base de ladite pluralité pour transmettre ce signal de liaison descendante qui suit sur la station mobile et qui informe la pluralité de stations d'émetteur-récepteur de base de la sélection réalisée en utilisant une information de sélection qui est incluse dans un ou plusieurs signaux de liaison montante (US) qui sont transmis par la station mobile sur ces stations d'émetteur-récepteur de base, ladite information de sélection étant la même pour toutes les stations de la pluralité de stations d'émetteur-récepteur de base et étant une instruction pour transmettre ("1") pour l'unique station d'émetteur-récepteur de base sélectionnée et une instruction pour ne pas transmettre ("0") pour chaque station d'émetteur-récepteur de base non sélectionnée, et ladite première station d'émetteur-récepteur de base comportant un moyen d'émetteur (26) qui est adapté pour émettre ledit signal de liaison descendante qui suit sauf s'il est empêché d'émettre par ledit circuit de commande ;
le circuit de commande comprenant :
un moyen de commande (28) qui peut fonctionner, si une telle information de sélection (BSM) est reçue au niveau de ladite première station d'émetteur-récepteur de base, pour examiner l'information de sélection reçue et pour induire cette invalidation du moyen d'émetteur si le moyen de commande reconnaît l'information de sélection reçue (BSM) en tant que dite instruction pour ne pas transmettre ("0") pour ladite première station d'émetteur-récepteur de base mais pour ne pas induire une telle invalidation si aucune information de sélection n'est reçue.
